Europäisches Patentamt

**European Patent Office**

**Office européen des brevets**

(19)

(11) Numéro de publication : **0 050 060**
**B1**

(12)

# FASCICULE DE BREVET EUROPÉEN

(45) Date de publication du fascicule du brevet :
07.05.86

(51) Int. Cl.⁴ : **G 01 S 15/89, G 10 K 11/34**

(21) Numéro de dépôt : **81401463.5**

(22) Date de dépôt : **18.09.81**

(54) **Système d'imagerie à émissions multiples et simultanées.**

(30) Priorité : **10.10.80 FR 8021681**

(43) Date de publication de la demande :
**21.04.82 Bulletin 82/16**

(45) Mention de la délivrance du brevet :
**07.05.86 Bulletin 86/19**

(84) Etats contractants désignés :
**DE GB NL**

(56) Documents cités :
**EP-A- 0 036 348**
**FR-A- 2 368 069**
**GB-A- 2 005 833**
**US-A- 3 311 869**
**US-A- 3 680 100**
**US-A- 3 771 116**
**L'ONDE ELECTRIQUE, vol. 49, no. 10, novembre
1969, PARIS (FR), S. DRABOWITH et al.: "Compression de diagramme par codage spatiotemporel d'une
antenne réseau", pages 1079-1086**
**IEEE, PROCEEDINGS OF THE ULTRASONICS SYM-
POSIUM, Cherry Hill, septembre 25-27, 1978, NEW
YORK (US), C. LARDAT: "Improved saw chirp spectrum analyser with 80dB dynamic range", pages 518-
521**

(73) Titulaire : **THOMSON-CSF**
**173, Boulevard Haussmann**
**F-75379 Paris Cedex 08 (FR)**

(72) Inventeur : **Tournois, Pierre**
**THOMSON-CSF SCPI - 173, bld Haussmann**
**F-75360 Paris Cedex 08 (FR)**

(74) Mandataire : **Desperrier, Jean-Louis et al**
**THOMSON-CSF SCPI 19, avenue de Messine**
**F-75008 Paris (FR)**

EP 0 050 060 B1

## Description

La présente invention a pour objet l'amélioration des systèmes de détection par échos du type radar ou sonar, permettant de fournir une image de l'espace environnant en temps réel. Le dispositif suivant l'invention s'applique plus particulièrement aux appareils sonars à haute définition par formation de voies, tels que les caméras acoustiques et les systèmes de classification de cibles en technique sous-marine, l'imagerie s'effectuant en vision frontale. L'invention s'applique aussi à l'imagerie acoustique médicale et aux tests non destructifs.

Les systèmes de type radar ou sonar sont généralement constitués d'au moins un émetteur dont les signaux émis « éclaireni » le champ angulaire à observer et d'une antenne de réception dont les signaux reçus sont utilisés pour former un ensemble de voies angulaires couvrant ce champ. A chaque voie formée correspond une répartition de l'énergie reçue dans l'espace, dont la largeur angulaire du lobe principal à la puissance moitié définit la résolution angulaire.

Il est connu de réaliser une imagerie à l'aide d'antennes d'émission et de réception formées par des alignements de transducteurs, suivant des directions orthogonales. Les signaux reçus autour d'une fréquence f par les transducteurs de l'antenne de réception sont retardés ou déphasés les uns par rapport aux autres pour former des voies dans des directions faisant un angle constant avec la direction de cette antenne de réception.

Les signaux émis autour de cette fréquence f, par les transducteurs de l'antenne d'émission, sont retardés ou déphasés les uns par rapport aux autres, pour former des voies dans des directions faisant un angle constant avec la direction de l'antenne d'émission. La formation des voies d'émission se fait séquentiellement dans le temps.

On obtient ainsi successivement des voies d'émission et de réception fines avec des largeurs angulaires des diagrammes à 3db d'atténuation = $\lambda/L$, ou $\lambda$ est la longueur d'onde correspondant à la fréquence f dans le milieu de propagation, et L la longueur supposée égale des antennes d'émission et de réception.

Ce dispositif de formation de voies angulaires fines, suivant l'art antérieur a le désavantage d'une faible cadence d'information, car il faut émettre sur tous les émetteurs autant de fois qu'il y a de voies d'émission.

Il est connu également de réaliser une imagerie acoustique avec un seul émetteur qui insonifie le champ angulaire désiré. L'antenne de réception, dans cette disposition est formée de plusieurs alignements de transducteurs. Un traitement de l'ensemble de signaux reçus par le transducteur permet de former des voies angulaires fines dans deux directions. Si le nombre de voies à former est important, ce qui est généralement le cas lorsque l'on veut obtenir une résolution angulaire fine, le nombre de récepteurs est important et le volume de circuits électriques également.

Il est aussi connu d'effectuer la formation des voies en utilisant des lentilles acoustiques. Cependant avec ce procédé le champ angulaire reste limité à quelques degrés et nécessite une « rétine » dans le plan de focalisation.

Il est également connu de la demande de brevet français n° 2 368 069 (Keating) de combiner cette technique de formation de voies fines à partir de transducteurs de réception, répartis sur une grille rectangulaire, avec une démultiplication de ces voies à l'aide de plusieurs transducteurs d'émission répartis selon un carré et émettant des signaux de fréquence distinctes. Le nombre de transducteurs de réception reste néanmoins très important en raison de leur disposition en grille qui fait que le nombre croît en fonction du carré des dimensions de cette grille. Par ailleurs, Keating utilise comme moyens de formation des voies un calculateur d'usage général 52 ou 68 dont le fonctionnement n'est pas particulièrement décrit et dont on peut douter qu'il puisse être suffisamment rapide pour donner une image complète en temps utile.

On connaît enfin de la demande de brevet européen 36 348 (THOMSON-CSF) un dispositif analogue à celui de Keating dans lequel on a multiplié le nombre de transducteurs d'émission et on utilise comme moyen de formation de voie un calculateur spécialisé qui comprend des moyens pour former séparément des « voies de réception » et des « voies d'émission à la réception ». Bien que ce calculateur spécialisé permet d'accélérer le traitement des signaux, la multiplication des transducteurs à l'émission et à la réception lui impose une lourde charge et ralentit considérablement la formation de l'image.

Pour pallier ces inconvénients, l'invention propose de grouper linéairement les transducteurs d'émission selon un premier axe, et les transducteurs de réception linéairement selon un deuxième axe perpendiculaire au premier. Les moyens de traitement des signaux de réception forment un premier ensemble de voies correspondant à des plans répartis en éventail selon une première coordonnée $\theta$, et dans chacun de ces plans un deuxième ensemble de voies correspondant à des directions réparties en éventail dans ce plan selon une deuxième coordonnée $\phi$. On obtient ainsi une analyse de l'espace selon un faisceau de voies régulièrement réparties selon les deux coordonnées $\theta$ et $\phi$ à partir d'une antenne formée de deux alignements de transducteurs disposés en croix.

D'autres caractéristiques et avantages ressortiront de la description qui va suivre, illustrée par les figures qui représentent :

figure 1 une représentation schématique de la formation de voies d'émission et de réception ;

**0 050 060**

figure 2  un schéma général des circuits de traitement des signaux de réception suivant l'invention ;
figure 3  un schéma de ces circuits de traitement dans une réalisation suivant l'invention ;
figures 4 et 5  quelques signaux temporels obtenus par traitement des signaux de réception ;
figure 6  le schéma de démodulation des signaux reçus ;
figure 7  le schéma de mise sur porteuse des signaux traités ;
figures 8 et 9  deux schémas de réalisation de la transformation de Fourier par filtres dispersifs à ondes élastiques ;
figure 10  le schéma de principe d'un dispositif de convolution à effet non linéaire par ondes de surface ;
figure 11  un schéma de formation des voies d'émission.

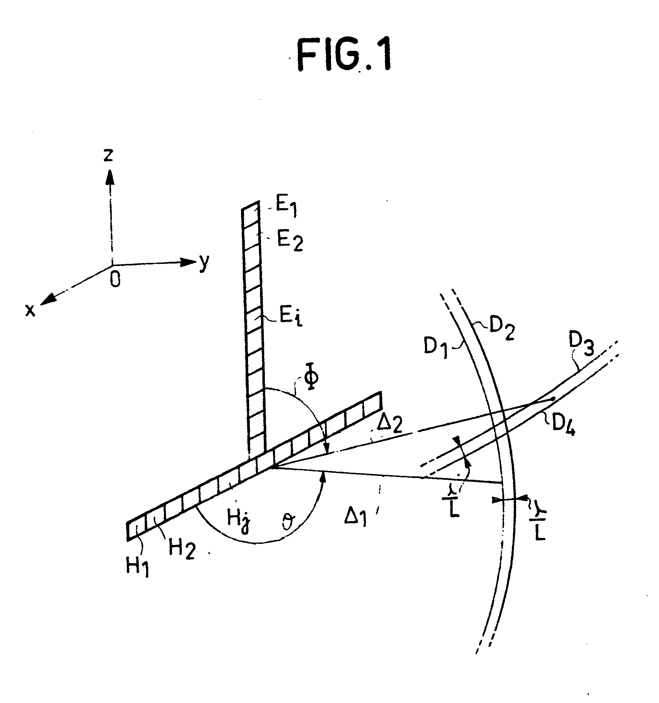

Le dispositif suivant l'invention se compose d'une antenne d'émission composée de M transducteurs d'émission $E_1$, $E_2$, ..., $E_i$, ..., $E_M$ et d'une antenne de réception composée de N transducteurs de réception $H_1$, $H_2$, ..., $H_i$, ..., $H_N$ (fig. 1). Sur cette figure on a représenté une antenne d'émission linéaire suivant une direction Oz et une antenne de réception linéaire suivant la direction perpendiculaire Ox.

Suivant l'invention, l'antenne d'émission-réception peut être composée d'un ensemble de transducteurs, dont un certain nombre sont susceptibles de posséder les fonctions d'émission, tandis que d'autres sont susceptibles de posséder les fonctions de réception. On peut avoir des transducteurs possédant à la fois des fonctions d'émission et de réception. Ces transducteurs échantillonnent convenablement l'espace, de façon que l'on puisse former des voies aussi bien à l'émission qu'à la réception.

La répartition de ces transducteurs peut être quelconque pourvu que l'on en connaisse leurs coordonnées. Les plus employées sont cependant les répartitions trirectangulaires, sphériques, cylindriques, circulaires, planes ou conformes.

Le dispositif d'émission-réception de la figure 1 permet de former des voies de réception dans une direction $\Delta_1$ et des voies d'émission dans une direction moyenne $\Delta_2$. Les droites $\Delta_1$ et $\Delta_2$ forment respectivement avec les directions Ox et Oz les angles $\theta$ et $\phi$. Sur cette figure on a représenté les traces $D_1$ et $D_2$ des courbes limites des diagrammes à 3dB d'atténuation des voies de réception. De même $D_3$ et $D_4$ sont les traces des courbes limites des voies d'émission pour les diagrammes à 3dB d'atténuation. Si L est la longueur des deux antennes les largeurs de ces voies sont égales à $\lambda/L$.

Suivant l'invention, l'émission est telle que les transducteurs $E_1$, $E_2$, ..., $E_i$, ..., $E_M$ de coordonnées spatiales connues émettent simultanément M signaux codés $C_1$, $C_2$, ..., $C_i$, ..., $C_M$ séparables de même bande b et de même durée T. La bande totale occupée par l'ensemble des émissions est égale à B. Les principaux types d'émissions possibles sont par exemple :

1. M signaux à fréquences pures $f_1$, ... $f_i$, ..., $f_M$ de durée T séparés en fréquence de b = 1/T.

2. M signaux de même fréquence centrale $f_0$ codés dans la même bande b suivant M codes orthogonaux de durée T avec bT > M.

3. M signaux codés dans la même bande b suivant un même code de durée T avec bT > 1 et de fréquences centrales différentes séparées en fréquence de la valeur b.

4. M signaux codés dans la même bande b suivant Q codes orthogonaux de durée T avec bT > Q et de P fréquences centrales différentes telles que PQ = M séparés en fréquence de la valeur b.

La réception consiste à recevoir sur les différents récepteurs $H_j$ les échos provenant des émissions, chaque capteur recevant au cours d'une récurrence tous les échos provenant des ondes émises par tous les émetteurs $E_1$ à $E_M$, les signaux produits par ces échos étant traités en deux étapes :

1. Formation de voies de réception $V_k$ dans plusieurs directions d'angles tels que $\theta = \phi_k$.

2. Formation de voies d'émission à la réception sur chaque signal de voie $V_k$ dans plusieurs directions définies par des angles tels que $\phi_i$.

Le principe de formation de voies d'émission, à la réception suivant l'invention, consiste en toute généralité à utiliser des émetteurs omnidirectionnels $E_1$ à $E_M$, répartis dans l'espace selon une certaine géométrie, et émettant M signaux séparables. Dans chaque direction déterminée par des angles $\theta$ et $\phi$ de l'espace se propage un signal $S(\theta, \phi)$ formé de la somme en amplitude et phase des signaux émis dans cette direction. Ce signal $S(\theta, \phi)$ dépend de la direction ainsi que de la position géométrique des émetteurs.

Pour chaque signal de voie de réception $V_k(\theta_k)$ la formation d'une voie d'émission de direction d'angle $\phi = \phi_i$ consiste à réaliser la corrélation du signal $V_k(\theta_k)$ par le signal $S_{i,k}(\phi_i, \theta_k)$, qui est le signal $S(\theta, \phi)$ dans la direction définie par les indices i et K.

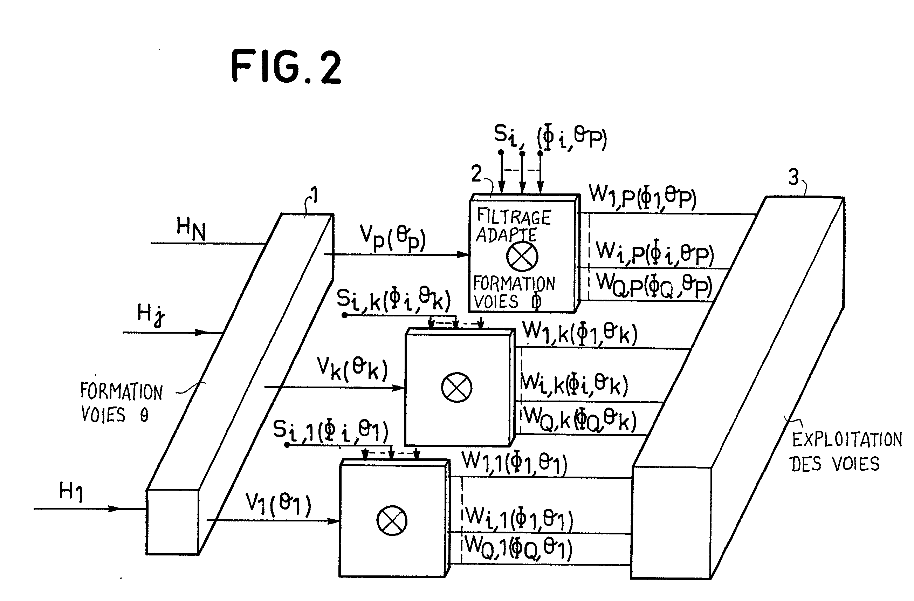

Le synoptique général du système est représenté sur la figure 2. L'ensemble 1 recevant N signaux provenant des N récepteurs de l'antenne, forme P voies de réception, de direction d'angles $\theta = \theta_1$, $\theta_2$ ... $\theta_k$, $\theta p$ fournissant signaux de voies $V_k(\theta_k)$.

Chaque signal de voie tel que $V_k(\theta_k)$ est envoyé dans un ensemble de traitement 2 qui réalise le filtrage adapté aux Q signaux $S_{i,k}(\phi_i, \theta_k)$ formant Q voies. Sur la figure on a symbolisé cette opération par le signe $\oplus$. En sortie des P ensembles 2 on obtient $P \times Q$ signaux de voies $W_{i,k}(\phi_i, \theta_k)$ qui sont ensuite exploités en 3.

L'ensemble de traitement 1 effectuant la formation des voies de réception $V_k$ peut être mis en œuvre suivant deux techniques principales connues en rapport avec le type d'antenne de réception et la bande de fréquence B des signaux $H_j$ reçus.

La première technique s'applique à tous les types d'antenne de réception. Les moyens de traitement

3

mis en œuvre sur les signaux reçus par tous les capteurs sont suivant que la valeur de la profondeur de l'antenne p est plus grande ou plus petite que C/B, où C est la vitesse des ondes dans le milieu de propagation, B étant la largeur de la bande des signaux émis. On définit la profondeur de l'antenne par la différence maximale de trajet des ondes entre deux capteurs :

a) si $p > C/B$, on utilise des dispositifs de compensation de retards entre les signaux des récepteurs pour la direction de la voie préformée ;

b) si $p > C/B$, on utilise des dispositifs de déphasage pour compenser les déphasages entre ces signaux des récepteurs pour la direction de la voie préformée.

La deuxième technique s'applique lorsque l'antenne de réception est formée d'un réseau linéaire de capteurs équidistants et lorsque la profondeur d'antenne p est inférieure à C/B. Les moyens de traitement mis en œuvre sur les signaux reçus par tous les capteurs sont un multiplexage des signaux reçus dans un intervalle de temps petit devant 1/B fournissant une séquence des signaux en série dans le temps, suivi d'un dispositif numérique ou analogique qui effectue la transformée de Fourier de cette séquence. Un tel dispositif de formation de voies par une méthode numérique est décrite dans un article de J. R. WILLIAMS dans « Journal of Acoustical Society of America », 44, 5. 1454-1455 (1968).

L'ensemble de traitement 2 effectuant la formation des voies d'émissions par filtrage adapté peut être mise en œuvre : soit en traitant chaque signal de voie de réception $V_k(\theta_k)$ en parallèle dans Q filtres adaptés aux Q signaux $S_{i,k}(\phi_i, \theta_k)$ i variant de 1 à Q, soit en traitant chaque signal de voie $V_k(\theta_k)$ de réception séquentiellement en le convoluant avec les Q copies des signaux $S_{i,k}(\phi_i, \theta_k)$ retournés dans le temps.

La réalisation préférée de l'invention comporte une antenne d'émission formée d'un réseau linéaire d'émetteurs et une antenne de réception formée d'un réseau linéaire de capteurs équidistants. Les deux antennes sont placées orthogonalement entre elles comme indiqué sur la figure 1. La bande d'émission B et la profondeur d'antenne p sont choisis pour mettre en œuvre la formation des voies de réception $V_k(\theta_k)$ par la technique utilisant une transformée de Fourier.

Suivant la réalisation préférée de l'invention, cette transformée de Fourier est réalisée analogiquement par l'utilisation de filtres dispersifs à ondes élastiques. Quant à la formation des voies d'émission, elle est obtenue par corrélation séquentielle des signaux de voies de réception avec les signaux $S_{i,k}$ obtenu par leur convolution avec les signaux $S_{i,k}$ retournés dans le temps. Suivant la réalisation préférée de l'invention, cette convolution est réalisée analogiquement par l'utilisation d'un convoluteur à ondes élastiques. Cette réalisation préférée a l'avantage de permettre des vitesses de fonctionnement élevées et de procurer un encombrement réduit.

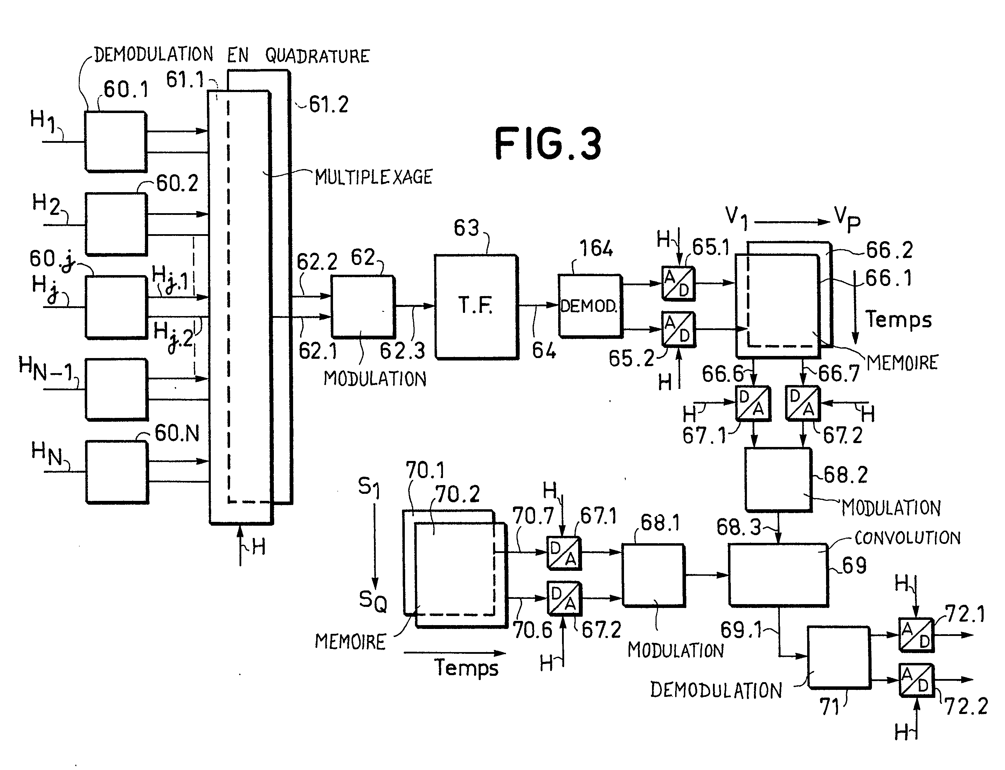

La réalisation préférée de l'invention à titre d'exemple est représentée sur la figure 3 et les figures 4 et 5 représentent les principaux signaux temporels relatifs à cette réalisation.

L'antenne d'émission, non représentée, est formée d'un réseau linéaire de M émetteurs recevant d'un générateur les signaux codés $C_1$ à $C_M$. Les M émissions sont produites simultanément, leur durée de T et leur bande b. Les types d'émissions possibles sont ceux décrits précédemment. La fréquence centrale de ces émissions est $f_o$ et la bande totale occupée est B.

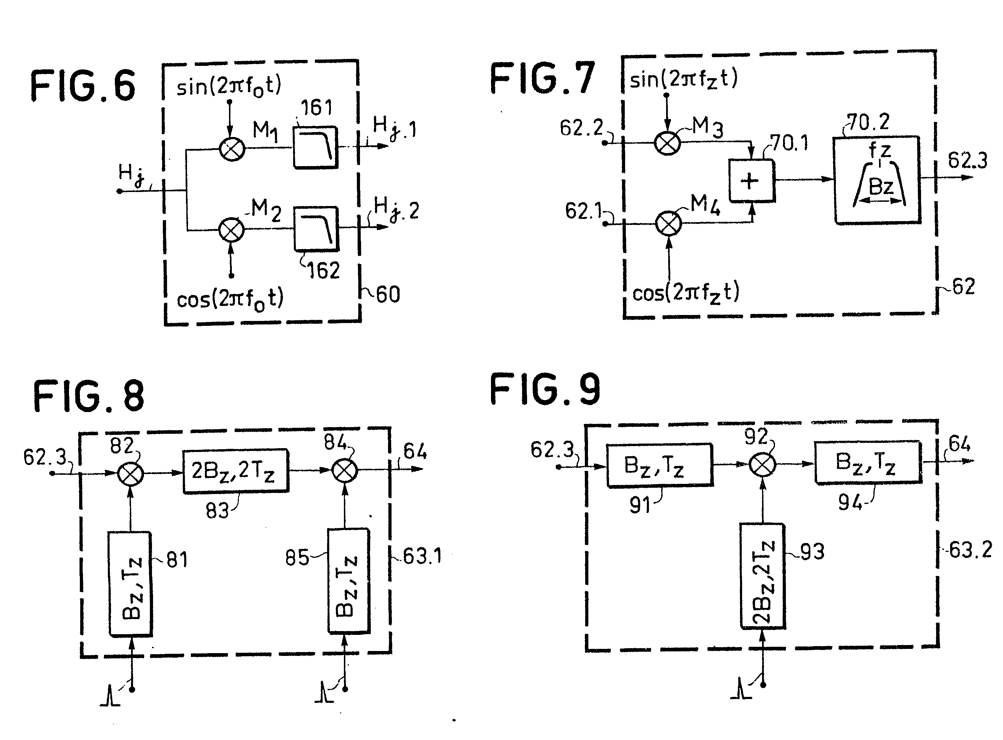

Les signaux sont reçus par une antenne de réception formée d'un réseau linéaire de N capteurs $H_1$ à $H_N$ équidistants, par exemple des hydrophones dans le cas d'un sonar. Ces signaux sont démodulés par N circuits 60.1, 60.2, ... 60.N représentés sur la figure 6. Chaque signal reçu par un capteur tel que $H_j$ est multiplié en $M_1$ et $M_2$ par les deux signaux $\cos(2\pi f_o t)$ et $\sin(2\pi f_o t)$ en quadrature de phase, fournis par un oscillateur local. On obtient ainsi les signaux $H_{j.1}$ et $H_{j.2}$ après filtrage passe-bas en 161 et 167 avec une fréquence de coupure voisine de B/2, ces deux signaux étant appelés composante réelle et composante imaginaire. Deux multiplexeurs synchrones 61.1 et 61.2 multiplexent les composantes réelle et imaginaire des N signaux démodulés $H_{j.1}$ et $H_{j.2}$. Ces circuits multiplexeurs sont commandés par un signal d'horloge H de période $T_H$, dont la valeur est choisie pour que N signaux par un capteur tel que $H_j$ soient multiplexés dans un intervalle de temps $NT_H$, petit devant 1/B. D'autre part, le signal de chaque hydrophone est échantillonné à la fréquence B, et on obtient en sortie de chaque circuit multiplexeur un signal composé de groupes de signaux de durée $NT_H$ séparés d'un temps 1/B. Ces deux signaux 62.1 et 62.2 obtenus en sortie de deux multiplexeurs 61.1 et 61.2 sont modulés dans un circuit 62 représenté sur la figure 7. Ils sont multipliés dans les circuits multiplicateurs $M_4$ et $M_3$ par les deux signaux $\cos(2\pi f_z t)$ et $\sin(2\pi f_z t)$ fournis par un oscillateur local, puis les deux signaux obtenus sont additionnés dans un circuit additionneur 70.1 et le signal obtenu est filtré dans un circuit de filtrage 70.2 passe-bande de largeur $B_z$ et de fréquence centrale $F_z$. La bande $B_z$ est fonction de la fréquence de multiplexage des signaux tels que $H_{j.1}$ et $H_{j.2}$ et la fréquence centrale $f_z$ est choisie de valeur égale à environ trois fois la bande $B_z$.

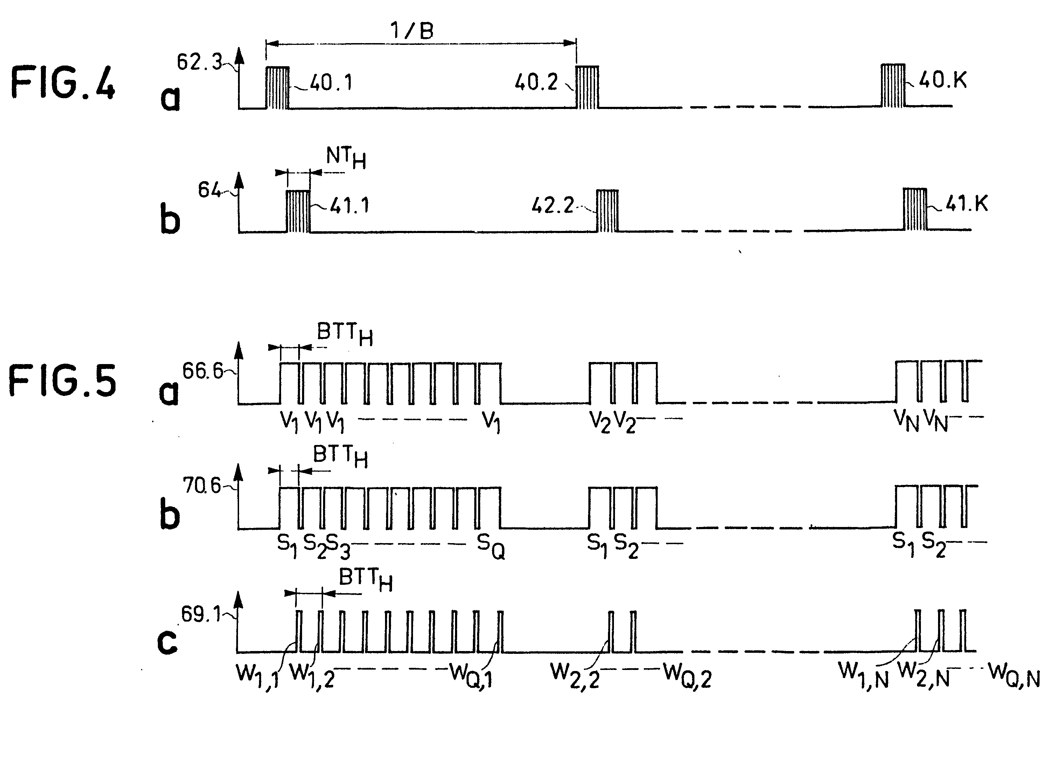

Le signal de sortie 62.3 du modulateur 62 est représenté schématiquement sur la figure 4-a. Il est composé sur la durée T de K = BT groupes de signaux 40.1, 40.2 ... 40.K. Chaque groupe correspond aux signaux reçus par les capteurs $H_1$, $H_2$, ... $H_N$, en série dans le temps à la période $T_H$. Ces signaux ont une bande $B_z$, une fréquence centrale $f_z$ et une durée $T_z$ égale à $NT_H$ petite devant 1/B.

Ce signal de sortie 62.3 du modulateur 62 est envoyé dans un transformateur de Fourier analogique 63 utilisant des filtres dispersifs à ondes élastiques et pour lequel deux modes de réalisation sont possibles.

Ces dispositifs de transformation de Fourier par filtres dispersifs sont décrits notamment dans un article de C.LARDAT dans « Proceedings 1978 IEEE Ultrasonic Symposium ». P 518-521 (1978).

4

Le premier mode de réalisation représenté sur la figure 8 est un montage appelé M-C-M (multiplication-convolution-multiplication). Dans ce montage le signal d'entrée 62.3 est prémultiplié dans un circuit multiplicateur 82 par un signal appelé « rampe » modulé linéairement en fréquence dont la bande est $B_z$ et la durée $T_z$. Ce signal est obtenu en envoyant une impulsion très brève à l'entrée d'un filtre dispersil 81. Le signal en sortie du multiplicateur 82 est convolué dans un filtre dispersif 83 dont la bande est $2B_z$ et la durée $2T_z$. Puis le signal obtenu est post-multiplié dans un circuit 84 par un signal de rampe identique au précédent généré par le filtre dispersif 85. Le signal de transformée de Fourier du signal d'entrée 62.3 est obtenu à la sortie 64 du multiplicateur 84.

Le deuxième mode de réalisation représenté figure 9 est un montage dit C-M-C (convolution-multiplicateur-convolution). Dans ce montage le signal d'entrée 62.3 est d'abord convolué dans un filtre dispersif 91 de bande $B_z$ et de durée $T_z$, puis multiplié en 92 par un signal de rampe fourni par un filtre dispersif 93 de bande $2B_z$ et de durée $2T_z$. Le signal obtenu en sortie du multiplicateur 92 est ensuite envoyé dans un filtre dispersif 94 identique au filtre 91. Le signal transformée de Fourier du signal 62.3 est obtenu à la sortie du filtre dispersif 94 en 64.

Le signal de sortie 64 d'un transformateur de Fourier 63 est représenté schématiquement sur la figure 4-b. Comme le signal d'entrée il est composé sur la durée T de K = BT groupes de signaux 41.1, 41.2, ..., 41.K. Chaque groupe comporte les N signaux de voies $V_1$ à $V_N$ en série dans le temps à la période $T_H$ et leur durée est $NT_H$. Ils sont décalés du temps mis pour effectuer la transformée de Fourier par rapport aux signaux 62.3 d'entrée.

Le signal transformé de Fourier 64 est ensuite démodulé dans le circuit 164, figure 3, de structure identique aux circuits 60 dans lequel les signaux en quadrature de phase sont $\cos(2\pi f_z t)$ et $\sin(2\pi f_z t)$. Les deux composantes obtenues sont converties en numérique par les deux convertisseurs 65.1 et 65.2 sous contrôle de l'horloge H et stockés séparément dans les mémoires numériques 66.1 et 66.2, ces mémoires étant par exemple du type à accès aléatoire (RAM). Chaque groupe de signaux de voies tel que 41.i est inscrit en mémoire sous forme d'une ligne. La mémoire est ainsi remplie séquentiellement ligne par ligne à la cadence 1/B et contient K = BT lignes. Les signaux ainsi mis en mémoire sont lus séquentiellement colonne par colonne à la cadence 1/B. La mémoire est par exemple scindée en deux blocs qui sont utilisés alternativement : remplissage d'un bloc ligne par ligne et simultanément lecture et l'autre bloc colonne par colonne, puis commutation des blocs.

L'antenne d'émission étant formée d'un réseau linéaire d'émetteurs les signaux $S_{i,k}(\phi, \theta_k)$, définis précédemment ne dépendent que des directions définies par l'angle $\phi_i$ avec l'antenne d'émission, et peuvent donc être exprimés suivant $S_i(\phi_i)$.

Le système comporte des mémoires numériques 70.1 et 70.2, par exemple de type RAM, qui contiennent les copies démodulées et inversées dans le temps des Q signaux $S_i(\phi_i)$ sous forme des composantes réelle et imaginaire. Ces Q signaux sont stockés sur la durée T à la fréquence B et comportent donc K échantillons.

Deux signaux $V_k(\theta_k)$ et $S_i(\phi_i)$ sont lus en synchronisme respectivement dans les mémoires 66.1, 66.2 et 70.1 et 70.2 sous contrôle de l'horloge H. Leur durée est identique et égale à $KT_H$. Un même signal de voie $V_k(\theta_k)$ est lu Q fois en synchronisme avec les Q signaux $S_1$ à $S_Q$. Les figures 5-a et 5-b représentent respectivement les signaux de voies $V_k$ et les signaux $S_i$ en fonction du temps. Chaque signal est composé de Q groupes de $KT_H$ signaux en série dans le temps. La cadence de lecture 1/B des signaux $V_k$ ou $S_i$ doit par conséquent être supérieure ou au moins égale à QKTH.

Les signaux de sortie 66.6, 66.7 et 70.6, 70.7 des mémoires 66 et 70 tels que représentés sur les figures 5-a et 5-b, sont convertis en analogique par les convertisseurs 67.1, 67.2, modulés par les deux circuits 68.1 et 68.2 et appliqués aux deux entrées d'un dispositif convoluteur 69 utilisant la propagation des ondes élastiques.

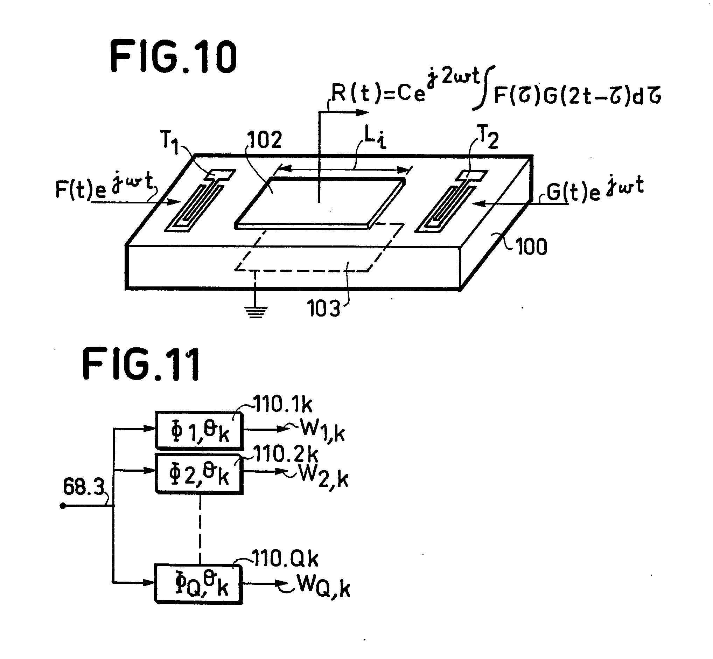

Ces signaux lus dans les mémoires sont modulés autour de la fréquence $f_z$ et dans la bande $B_z$, les circuits 68.1 et 68.2 étant identiques au circuit 62 représenté sur la figure 7. Le convoluteur 69 fonctionne autour de cette fréquence centrale $f_z$ et autour de cette bande $B_z$ et il est représenté sur la figure 10.

Le dispositif à ondes de surface acoustique 100 connu par ailleurs (figure 10) est muni de deux électrodes 102 et 103 de longueur $L_i$. Les signaux à convoluer $F(t)e^{jwt}$ et $G(t)e^{jwt}$, où $\omega$ est la fréquence angulaire de la porteuse, sont appliqués à des transducteurs en peigne $T_1$ et $T_2$ placés aux deux extrémités du dispositif 100. Par suite des effets non linéaires on recueille entre les deux électrodes, le signal convolué $R(t)$ tel que :

$$R(t) = C\, e^{2j\omega t} \int F(t)\, G(2t - \tau)\, d\tau$$

où C est une constante.

Si v est la vitesse de propagation des ondes élastiques la longueur d'interaction $L_i$ est égale à $KT_H \times v$. Le signal de sortie de convoluteur est représenté sur la figure 5-c. Il est composé par voie $V_k$ de Q signaux de corrélation séparés d'un temps égal à $KT_H$ et de fréquence centrale $2f_z$ qui sont relatifs aux signaux de voies formées suivant Q directions $\phi_i$ pour la direction $\theta_k$ soit $W_{1,k}$ à $W_{Q,k}$. Ces signaux sortent du convoluteur avec un décalage en temps égal à la durée $KT_H$ des signaux d'entrée.

# 0 050 060

Le signal de sortie du convoluteur est ensuite démodulé dans le circuit 71 identique au circuit 60 représenté figure 6 dans lequel la fréquence $f_0$ est remplacée par la fréquence $2f_z$ fournie par un oscillateur local, puis converti en numérique par les convertisseurs 72.1 et 72.2 pour être stockés en mémoire ou exploités. Ces signaux fournissent une image en deux dimensions $\theta$, $\phi$ au cours d'une durée T.

Si l'antenne d'émission est quelconque, dans ce cas les mémoires 70.1 et 70.2 doivent stocker les copies des $Q \times N$ signaux $S_{i,k}(\phi_i, \theta_k)$ et leur taille est plus importante. A chaque fois qu'un signal de voie $V_k(\theta_k)$ est lu dans les mémoires 66.1 et 66.2, les Q signaux correspondants $S_{1,k}(\phi_i, \theta_k)$ à $S_{Q,k}(\theta_Q, \theta_k)$ sont lus dans les mémoires 70.1 et 70.2.

Un système d'imagerie acoustique réalisé suivant l'invention avec des antennes linéaires orthogonales pour l'émission et la réception a les caractéristiques suivantes :
— nombre d'émetteurs $M = 50$
— nombre de récepteurs $N = 50$
— espacement entre émetteurs et récepteurs $d = 0,75$ mm
— fréquence moyenne des émissions $f_0 = 3$ MHz
— durée d'impulsion $T = 10$ ms
— bande totale $B = 5$ kHz soit $1/B = 200$ µs
— champ angulaire en $\theta$ et en $\phi = \pm 20$ degrés
— profondeur des antennes en temps $= 20$ µs
— période d'horloge $T_H = 50$ ns
— bande $B_z = 20$ MHz
— fréquence $f_z = 100$ MHz.

Pour cette réalisation le nombre de voies Q est pris égal à N. De plus le produit BT est égal à Q de sorte que $N = M = Q = BT = K$. La condition $QBTT_H < 1/B$ est réalisée. La durée des signaux à l'entrée et à la sortie du transformateur de Fourier ainsi qu'à l'entrée du convoluteur est égale à 2,5 µs.

Une variante de réalisation est représentée sur la figure 11. Elle met en application le traitement en parallèle mentionné précédemment. Le signal de sortie pour chaque voie telle que $V_k(\theta_k)$ du modulateur 68.2 en 68.3 (fig. 3) est envoyé simultanément sur l'entrée de Q filtres adaptés 110.1k, 110.2k, ...110.Qk aux signaux $S_{1,k}$ à $S_{Q,k}$. Ces filtres sont par exemple réalisés en utilisant la propagation des ondes élastiques, la durée de la réponse impulsionnelle de chaque filtre correspond à la durée T et chaque filtre aboutit à un traitement équivalent à une convolution et les signaux de sortie de chaque filtre adapté présentent un maximum représentatif du signal provenant d'une direction $\phi_i$, $\theta_k$.

Dans le cas où l'antenne d'émission est formée d'un réseau linéaire d'émetteurs l'ensemble des Q filtres 110.1k à 110.Qk reste identique pour les N signaux de voies $V_k(\theta_k)$ et peut être multiplexé.

## Revendications

1. Système d'imagerie ultrasonore comportant une antenne d'émission formée d'un ensemble d'émetteurs omnidirectionnels (E) émettant simultanément dans l'espace des signaux codés distincts pour chaque émetteur, une antenne de réception formée d'un ensemble de récepteurs omnidirectionnels (H) permettant de recevoir les signaux des émetteurs réémis par au moins une cible, et des moyens de traitement des signaux reçus pour former un ensemble de voies permettant d'analyser l'espace et de former une image bidimensionnelle, caractérisé en ce que l'antenne d'émission comprend M émetteurs $(E_1-E_M)$ équidistants alignés selon un premier axe (OZ) et l'antenne de réception comprend N récepteurs $(H_1-H_N)$ équidistants alignés selon un deuxième axe (OX) perpendiculaire au premier, et que les moyens de traitement des signaux de réception comportent des premiers moyens (1) pour former par décalage temporel P premières voies angulaires $(V_1-V_P)$ correspondant chacune à un plan passant par l'antenne d'émission et incliné d'un angle $\theta_k$ ($k = 1$ à P) par rapport au deuxième axe (OX), et des deuxièmes moyens (2) pour former dans chacune de ces P premières voies, par décodage des codes d'émission, Q secondes voies angulaires $(W_{1,k}-W_{Q,k})$ correspondant chacune à une direction passant par l'intersection (O) des axes des antennes d'émission et de réception, contenue dans le plan de la voie et inclinée d'un angle $\phi_i$ ($i = 1$ à Q) par rapport au premier axe (OZ), ce qui permet d'obtenir une résolution correspondant à $P \times Q$ voies.

2. Système selon la revendication 1, dans lequel chaque voie définie par une paire d'angles $\theta_k$ et $\phi_i$ la somme des signaux émis par les transducteurs selon cette voie correspond à un signal $S_{i,k}(\phi_i, \theta_k)$, caractérisé en ce que les deuxièmes moyens (2) de formation de voies fonctionnent en réalisant le filtrage adapté de chaque signal de première voie $V_k(\theta_k)$ avec les Q copies des signaux $S_{i,k}(\phi_i, \theta_k)$ correspondant à cette voie d'indice k.

3. Système selon la revendication 2, caractérisé en ce que le filtrage adapté est obtenu par Q filtres (110.1k-110.Q$_k$) en parallèle pour chaque signal de première voie $V_k(\theta_k)$.

4. Système selon la revendication 2, caractérisé en ce que le filtrage adapté est obtenu par convolution de chaque signal de première voie $V_k(\theta_k)$ avec les Q signaux $S_{i,k}(\phi_i, \theta_k)$ retournés dans le temps.

5. Système selon la revendication 4, caractérisé en ce qu'il comprend un unique convoluteur (100-

6

103) à ondes élastiques de surface et que la convolution de chaque signal de première voie $V_k(\theta_k)$ est traitée dans ce convoluteur avec successivement les Q signaux $S_{i,k}$ $(\phi_i, \theta_k)$ dans un temps inférieur à 1/B, B étant la bande de fréquence des signaux reçus.

6. Système selon la revendication 1, caractérisé en ce que la profondeur de l'antenne de réception dans la direction la plus inclinée est inférieure à C/B, C étant la vitesse de propagation des signaux reçus et B leur bande de fréquence, et que les premiers moyens (1) de formation de voie comprennent un multiplexeur (61) pour multiplexer les signaux des N récepteurs avec une période $T_H \ll 1/NB$ et un ensemble de filtres dispersifs (63) à ondes élastiques de surface permettant d'effectuer la transformée de Fourier des signaux fournis par le multiplexeur et délivrant N signaux de première voie $V_k$ $(\theta_k)$ séquentiellement dans le temps sur une durée égale à $NT_H \leqslant 1/B$.

7. Système selon la revendication 6, caractérisé en ce que le multiplexeur (61) échantillonne les signaux des N récepteurs à une fréquence égale à 1/B, et que le transformateur de Fourier (63) délivre donc dans l'intervalle 1/B N signaux de première voie, et que les deuxièmes moyens (2) de formation de voie comprennent une première mémoire numérique (66) comportant BT lignes, T étant la durée des signaux émis par l'antenne d'émission, et N colonnes, des moyens pour écrire dans la mémoire ligne par ligne pendant la durée T les NT signaux de première voie délivrés par le transformateur de Fourier, et des moyens pour lire colonne par colonne à la cadence 1/B pendant la durée T les N signaux de première voie $V_k(\theta_k)$ composés chacun de BT échantillons lus avec une période $T_H$.

8. Système selon les revendications 5 et 7, caractérisé en ce que les deuxièmes moyens (2) de formation de voie comprennent en outre une deuxième mémoire numérique (70) dans laquelle sont mémorisés les N × Q copies des signaux $S_{i,k}$ $(\phi_i, \theta_k)$, chacune de ces copies étant composées de BT échantillons, des moyens pour lire ces signaux à la cadence 1/B avec une période $T_H$, et des moyens pour appliquer en synchronisme au convoluteur (69) les signaux lus dans les deux mémoires ; la durée de ces signaux étant égale à $BTT_H$ et $QBTT_H$ étant inférieur à 1/B.

9. Système selon les revendications 3 et 7, caractérisé en ce que la réponse impulsionnelle des filtres adaptés (110) a une durée T.

### Claims

1. Ultrasonic imaging system comprising a transmission antenna formed by an array of omnidirectional transmitters (E) transmitting simultaneously into space coded signals distinct for each transmitter, a reception antenna formed by an array of omnidirectional receivers (H) capable of receiving the signals of the transmitters reflected back from at least one target, and means for processing the signals received to form a set of paths permitting analysis of the space and formation of a bidimensional image, characterized in that the transmission antenna comprises M equidistant transmitters ($E_1$-$E_M$) aligned along a first axis (OZ) and the reception antenna comprises N equidistant receivers ($H_1$-$H_N$) aligned along a second axis (OX) perpendicular to the first, and that the means for processing the reception signals comprise first means (1) for forming by time displacement P first angular paths ($V_1$-$V_P$) each corresponding to a plane passing through the transmission antenna and inclined at an angle $\theta_k(k = 1$ to P) with respect to the second axis (OX), and second means (2) for forming in each of said P first paths by decoding the transmission codes Q second angular paths ($W_{1,k}$-$W_{Q,k}$) each corresponding to a direction passing through the intersection (0) of the axes of the transmission and reception antennas contained in the plane of the path and inclined at an angle $\phi_i$ (i = 1 to Q) with respect to the first axis (OZ), thus enabling a resolution corresponding to P × Q paths to be obtained.

2. System according to claim 1 in which for each path defined by a pair of angles $\theta_k$ and $\phi_i$ the sum of the signals emitted by the transducers of said path corresponds to a signal $S_{i,k}$ $(\phi_i, \theta_k)$, characterized in that the second means (2) for path formation functions by providing the adapted filtering of each first path signal $V_k(\theta_k)$ with the Q copies of the signals $S_{i,k}$ $(\phi_i, \theta_k)$ corresponding to said path of index k.

3. System according to claim 2, characterized in that the adapted filtering is obtained by Q filters (110.1k-110.$Q_k$) in parallel for each signal of the first path $V_k(\theta_k)$.

4. System according to claim 2, characterized in that the adapted filtering is obtained by convolution of each signal of the first path $V_k(\theta_k)$ with the Q signals $S_{i,k}$, $(\phi_i, \theta_k)$ inverted in time.

5. System according to claim 4, characterized in that it comprises a single elastic surface wave convolutor (110-103) and that the convolution of each signal of the first path $V_k(\theta_k)$ is processed in said convolutor successively with the Q signals $S_{i,k}$ $(\phi_i, \theta_k)$ in a time less than 1/B, B being the frequency band of the signals received.

6. System according to claim 1, characterized in that the depth of the antenna reception in the most inclined direction is less than C/B, C being the speed of propagation of the signals received and B their frequency band, and that the first means (1) for path formation comprise a multiplexer (61) for multiplexing the signals of the N receivers with a period $T_H \ll 1/NB$ and a set of dispersive elastic surface wave filters (63) permitting the formation of the Fourier transform of the signals furnished by the multiplexer and furnishing N signals for the first path $V_k(\theta_k)$ sequentially in the time over a duration equal to $NT_H \leqslant 1/B$.

7. System according to claim 6, characterized in that the multiplexer (61) samples the signals of the N receivers at a frequency equal to 1/B and that the Fourier transformer (63) then delivers in the interval 1/B N signals of the first path, and that the second means (2) for path formation comprise a first digital memory (66) comprising BT lines, T being the duration of the signals transmitted by the transmission antenna, and N columns, means for writing to the memory line by line for the duration T of the NT signals the first path delivered by the Fourier transformer, and means for reading column by column in the rhythm 1/B for the duration T the N signals of the first path $V_k(\theta_k)$ each made up of BT samples read with a period $T_H$.

8. System according to claims 5 and 7, characterized in that the two means (2) for path formation further comprise a second digital memory (70) in which are stored the $N \times Q$ copies of the signals $S_{i,k}$ ($\phi_i$, $\theta_k$), each of said copies being made up of BT samples, means for reading said signals at the rhythm 1/B with a period $T_H$, and means for applying in synchronism to the convolutor (69) the signals read form the two memories, the duration of said signals being equal to $BTT_H$ and $QBTT_H$ being less than 1/B.

9. System according to claims 3 and 7, characterized in that the pulse response of the adapted filters (110) has a duration T.

**Patentansprüche**

1. Ultraschall-Abbildungssystem mit einer Sendeantenne, welche aus einer Gruppe von omnidirektionalen Sendern (E) gebildet ist, die gleichzeitig in den Raum codierte Signale ausstrahlen, die für jeden Sender verschieden sind, mit einer Empfangsantenne, welche aus einer Gruppe von omnidirektionalen Empfängern (H) gebildet ist, die es gestatten, die Signale der Sender zu empfangen, welche von wenigstens einem Ziel rückgestrahlt werden, und mit Verarbeitungsmitteln für die empfangenen Signale, um eine Gruppe von kanälen zu bilden, welche die Analyse des Raumes und die Erzeugung eines zweidimensionalen Bildes gestatten, dadurch gekennzeichnet, daß die Sendeantenne M äquidistante Sender ($E_1$-$E_M$) umfaßt, welche längs einer ersten Achse (OZ) ausgerichtet sind, und die Empfangsantenne N äquidistante Empfänger ($H_1$-$H_N$) umfaßt, die entlang einer zweiten, zur ersten senkrechten Achse (OX) orientiert sind und daß die Verarbeitungsmittel für die Empfangssignale versehen sind mit ersten Mitteln (1) zur Bildung erster Winkelkanäle ($V_1$-$V_P$) durch zeitliche Verschiebung P jeweils entsprechend einer Ebene, welche durch die Sendeantenne geht und um einen Winkel $\theta_k$($k = 1$ bis P) gegenüber der zweiten Achse (OX) geneigt ist, und mit zweiten Mitteln (2), um in jedem dieser P ersten Kanäle durch Decodierung der Sendecodes Q zweite Winkelkanäle ($W_{1,k}$-$W_{Q,k}$) zu bilden, welche jeweils einer Richtung entsprechen, die durch den Schnittpunkt (0) der Achsen der Sendeantenne und Empfangsantenne geht, in der Ebene des Kanals enthalten ist und um einen Winkel $\phi_i$ ($i = 1$ bis Q) gegenüber der ersten Achse (OZ) geneigt ist, wodurch eine Auflösung erhalten wird, die $P \times Q$ Kanälen entspricht.

2. System nach Anspruch 1, bei welchem für jeden durch ein Winkelpaar $\theta_k$ und $\phi_i$ definierten Kanal die Summe der von den Wandlern dieses Kanales ausgesendeten Signale einem Signal $S_{i,k}$ ($\phi_i$, $\theta_k$) entspricht, dadurch gekennzeichnet, daß die zweiten Mittel (2) zur Kanalbildung eine solche Funktion ausüben, daß sie die angepaßte Filterung jedes Signals des ersten Kanals $V_k(\theta_k)$ mit den Q Kopien der Signale $S_{i,k}(\phi_i$, $\theta_k$) durchführen, welche diesem Kanal mit dem Index k entsprechen.

3. System nach Anspruch 2, dadurch gekennzeichnet, daß die angepaßte Filterung durch Q Filter (110.1k-110.$Q_k$) im Parallelbetrieb für jedes Signal des ersten Kanals $V_k(\theta_k)$ erhalten wird.

4. System nach Anspruch 2, dadurch gekennzeichnet, daß die angepaßte Filterung durch Faltung jedes Signals des ersten Kanals $V_k(\theta_k)$ mit den Q Signalen $S_{i,k}$ ($\phi_i$, $\theta_k$) nach Zeitumkehrung derselben erhalten wird.

5. System nach Anspruch 4, dadurch gekennzeichnet, daß es einen einzigen Konvolutor (100-103) umfaßt, der mit elastischen Oberflächenwellen arbeitet, und daß die Faltung jedes Signals des ersten Kanals $V_k(\theta_k)$ in diesem Konvolutor sukzessiv verarbeitet wird mit den Q Signalen $S_{i,k}$ ($\phi_i$, $\theta_k$) in einer Zeit von weniger als 1/B, worin B das Frequenzband der Empfangssignale ist.

6. System nach Anspruch 1, dadurch gekennzeichnet, daß die Tiefe der Empfangsantenne in der am stärksten geneigten Richtung geringer als C/B ist, worin C die Ausbreitungsgeschwindigkeit der Empfangssignale und B ihr Frequenzband ist, und daß die ersten Mittel (1) zur Kanalbildung einen Multiplexer (61) umfassen, um die Signale der N Empfänger mit einer Periode $T_H \ll 1/NB$ zu multiplexieren, und eine Gruppe von dispersiven Filtern (63) umfassen, die mit elastischen Oberflächenwellen arbeiten und die Bildung der Fourier-transformierten der vom Multiplexer gelieferten Signale gestatten sowie N Signale für den ersten Kanal $V_k(\theta_k)$ sequentiell in der Zeit über eine Dauer von $NT_H \le 1/B$ liefern.

7. System nach Anspruch 6, dadurch gekennzeichnet, daß der Multiplexer (61) die Signale der N Empfänger mit einer Frequenz von 1/B abtastet und daß der Fourier-Transformator (63) folglich innerhalb des Intervalls 1/B N Signale des ersten Kanals abgibt, und daß die zweiten Mittel (2) zur Kanalbildung versehen sind mit einem ersten digitalen Speicher (66), der BT Zeilen enthält, worin T die Dauer der von der Sendeantenne ausgestrahlten Signale ist, und N Spalten enthält, Mitteln, um in den Speicher Zeile für Zeile während der Dauer T die NT Signale des ersten Kanals einzuschreiben, welche von dem Fourier-Transformator abgegeben werden, und mit Mitteln, um Spalte für Spalte im Rhythmus 1/B während der Dauer T die N Signale des ersten Kanals $V_k(\theta_k)$ auszulesen, welche jeweils aus BT Abtastproben zusammengesetzt sind, die mit einer Periode $T_H$ ausgelesen wurden.

8. System nach den Ansprüchen 5 und 7, dadurch gekennzeichnet, daß die zweiten Mittel (2) zur Kanalbildung ferner einen zweiten digitalen Speicher (70) umfassen, worin die N × Q Kopien der Signale $S_{i,k}$ ($\phi_i$, $\theta_k$) gespeichert sind, wobei jede dieser Kopien zusammengesetzt ist aus BT Abtastproben, Mittel zum Auslesen dieser Signale im Rhythmus 1/B mit einer Periode $T_H$ umfassen sowie Mittel umfassen, um an den Konvolutor (69) synchron die aus den beiden Speichern ausgelesenen Signale anzulegen : wobei die Dauer dieser Signale gleich $BTT_H$ ist sowie $QBTT_H$ kleiner als 1/B ist.

9. System nach den Ansprüchen 3 und 7, dadurch gekennzeichnet, daß die Impulsantwort der angepaßten Filter (110) eine Dauer T aufweist.

FIG.1

# FIG.2

$S_{i,}(\phi_i, \theta_P)$

$H_N$

$V_p(\theta_p)$

2

FILTRAGE
ADAPTE
$\otimes$
FORMATION
VOIES $\phi$

$W_{1,P}(\phi_1, \theta_P)$

$W_{i,P}(\phi_i, \theta_P)$

$W_{Q,P}(\phi_Q, \theta_P)$

3

$H_j$

$S_{i,k}(\phi_i, \theta_k)$

$V_k(\theta_k)$

$\otimes$

$W_{1,k}(\phi_1, \theta_k)$

$W_{i,k}(\phi_i, \theta_k)$

$W_{Q,k}(\phi_Q, \theta_k)$

FORMATION
VOIES $\theta$

1

$S_{i,1}(\phi_i, \theta_1)$

EXPLOITATION
DES VOIES

$H_1$

$V_1(\theta_1)$

$\otimes$

$W_{1,1}(\phi_1, \theta_1)$

$W_{i,1}(\phi_1, \theta_1)$

$W_{Q,1}(\phi_Q, \theta_1)$

FIG.3

FIG.4

a    1/B

62.3    40.1    40.2    40.K

b    NT_H

64    41.1    42.2    41.K

FIG.5

a    BTT_H

66.6    V_1 V_1 V_1 — — — — — V_1    V_2 V_2 — —    V_N V_N — —

b    BTT_H

70.6    S_1 S_2 S_3 — — — — S_Q    S_1 S_2 — —    S_1 S_2 — —

c    BTT_H

69.1    W_{1,1} W_{1,2} — — — — W_{Q,1}    W_{2,2} — — W_{Q,2}    W_{1,N} W_{2,N} — W_{Q,N}

0 050 060

FIG.6

FIG.7

FIG.8

FIG.9

# FIG.10

$$R(t)=Ce^{j2\omega t}\int F(\tau)G(2t-\tau)d\tau$$

$T_1$  102  $L_i$  $T_2$

$F(t)e^{j\omega t}$  $G(t)e^{j\omega t}$

100

103

# FIG.11

68.3

$\phi 1, \theta_k$  110.1k  $W_{1,k}$

$\phi 2, \theta_k$  110.2k  $W_{2,k}$

$\phi Q, \theta_k$  110.Qk  $W_{Q,k}$

6